# EUROPÄISCHE PATENTSCHRIFT

(11) **EP 0 536 467 B1**
(45) Veröffentlichungstag und Bekanntmachung des Hinweises auf die Patenterteilung: **16.08.1995**
(21) Anmeldenummer: 92107945.5
(22) Anmeldetag: 12.05.1992
(51) Int. Cl.: F16H 55/14, F16F 15/12

(54) **Topfförmiger Rotationskörper**
Pot-shaped body of revolution
Corps de rotation en forme de pot

(30) Priorität: 08.10.1991 DE 4133286
(43) Veröffentlichungstag der Anmeldung: 14.04.1993
(73) Patentinhaber: Firma Carl Freudenberg, 69469 Weinheim (DE)
(72) Erfinder: Hönlinger, Herwig, W-6845 Gross-Rohrheim (DE); Eichhorn, Jürgen, W-6940 Weinheim/ (DE)

(56) Entgegenhaltungen:
- AT-B- 172 233
- DE-C- 1 165 940
- DE-U- 6 601 433
- US-A- 3 057 220
- US-A- 4 850 243

## Beschreibung

Die Erfindung betrifft einen topfförmigen Rotationskörper, an dem ein Ringelement aus elastischem Werkstoff im Bereich zumindest eines in axialer Richtung vorstehenden Kragens festgelegt ist, wobei das Ringelement und der Rotationskörper unter Vermeidung einer inneren Vorspannung einander anliegend berühren und wobei zwischen dem Ringelement und dem Rotationskörper in zumindest einem Teilbereich ein radialer Spaltabstand vorhanden ist, wobei der Kragen mit einer in radialer Richtung in sein Profil einschneidenden, ringförmig umlaufenden Nut versehen ist.

Ein solcher Rotationskörper ist aus der AT-B-172 233 bekannt. Der Rotationskörper ist durch ein schnell laufendes, schalenförmiges Zahnrad aus metallischem Werkstoff gebildet, wobei zur Dämpfung der Geräuschentwicklung ein mit dem Zahnradkörper fest verbundener Dämpfungskörper vorgesehen ist, der aus elastomerem Werkstoff besteht. Der Dämpfungskörper ist in einer in axialer Richtung einseitig offenen Ausnehmung des Zahnradkörpers angeordnet und durch einen Befestigungsring in seiner Position gehalten, der separat vom Zahnradkörper hergestellt und mit diesem verschraubt ist.

Aus der DE-C-1 165 940 ist ein Schwingungsdämpfer bekannt, der zur Absorption akustisch störender Schwingungen in Zahnrädern zur Anwendung gelangt. Der Schwingungsdämpfer ist durch eine Schraubenfeder gebildet, die in einer Nut des Zahnrades angeordnet ist. Die Schraubenfeder liegt dicht gegen die Bodenfläche der Ringnut an und besteht aus einem Federstahl. Die Schraubenfeder wird derart eingesetzt, daß eines ihrer Enden in die Ringnut eingeführt und die Schraubenfeder dann so lange gedreht wird, bis sie völlig in die Ringnut eingetreten ist.

Ein weiterer Rotationskörper ist aus der DE-A- 30 23 977 bekannt. In diesem Fall ist der Rotationskörper als Getrieberad ausgebildet, der zur Absorption akustisch störender Schwingungen zwei verformbare Ringelemente aus elastomerem Werkstoff aufweist. Diese sind in Aussparungen des Getrieberades angeordnet und in radialer Richtung zwischen den einander zugewandten Zylinderflächen eines ebenfalls in der Aussparung angeordneten Halteringes und des Getrieberadkörpers eingepreßt. Dabei ist allerdings zu beachten, daß die Absorption akustisch störender Schwingungen durch die Einpressung des Ringelementes in die Aussparung des Getrieberades wenig befriedigend ist.

Der Erfindung liegt die Aufgabe zugrunde, einen topfförmigen Rotationskörper der eingangs genannten Art derart weiterzuentwickeln, daß sich bei einer guten Isolierung akustisch störender Schwingungen ein verringerter Herstellungs- und Montageaufwand ergibt.

Diese Aufgabe wird erfindungsgemäß mit dem kennzeichnenden Merkmal von Patentanspruch 1 gelöst. Auf vorteilhafte Ausgestaltungen nehmen die Unteransprüche bezug.

Der Kragen des topfförmigen Rotationskörpers ist mit einer in radialer Richtung in sein Profil einschneidenden, ringförmig umlaufenden Nut versehen und das Ringelement ist nur durch Einschnappen in der Nut festgelegt. Diese Ausgestaltung bedingt eine besonders einfache Herstellung und Montage des topfförmigen Rotationskörpers und vermeidet akustisch störende Schwingungen während der bestimmungsgemäßen Verwendung. Von hervorzuhebender Bedeutung ist, daß ein Ringelement, das nur durch Einschnappen in der Nut festgelegt ist, im Vergleich zu eingepreßten oder eingeklebten Ringelementen eine deutlich verbesserte Wirkung hinsichtlich der Isolierung akustisch störender Schwingungen aufweist.

Das Ringelement und der Rotationskörper berühren einander anliegend unter Vermeidung einer inneren Vorspannung. Diese Ausgestaltung bewirkt eine besonders einfache Montage von Ringelement und Rotationskörper und bedingt ausgezeichnete Gebrauchseigenschaften während einer langen Gebrauchsdauer dadurch, daß das Ringelement aus elastischem Werkstoff keine Relaxationserscheinungen aufweist.

Zwischen dem Ringelement und dem Rotationskörper ist in zumindest einem Teilbereich ein Spaltabstand vorhanden. Der Spaltabstand weist eine radiale Weite von höchstens 0,5 mm auf, bevorzugt aber eine Weite von 0,1 bis 0,3 mm. Eine besonders gute Anpassung an die jeweiligen Gegebenheiten des Anwendungsfalles kann durch eine derartige Ausgestaltung erzielt werden.

Das Ringelement kann die Nut in radialer Richtung mit einem umlaufenden Vorsprung überragen wobei der Vorsprung außerhalb der Nut einen an das Profil des Rotationskörpers zumindest teilweise angepaßten Querschnitt hat. Auch diese, nicht allseitig von Stützelementen oder dem Rotationskörper unter Vorspannung umschlossene Anordnung des Ringelementes trägt zu der vorteilhaften Wirkung maßgeblich bei. Durch diese Anordnung ist das Ringelement besonders flexibel mit dem topfförmigen Rotationskörper verbunden und vermag hochfrequente Schwingungen im akustisch störenden Bereich wirkungsvoll zu unterdrücken. Darüberhinaus ist von Vorteil, daß das Ringelement den Rotationskörper zumindest teilweise flächig anliegend berührt. Gemäß einer vorteilhaften Ausgestaltung ist vorgesehen, daß sich das Ringelement außerhalb der Nut in axialer Richtung weitgehend parallel zum Kragen erstreckt.

Nach einer anderen vorteilhaften Ausgestaltung ist es vorgesehen, daß die Nut im Bereich des Außenumfanges des Kragens angeordnet und in radialer Richtung durch eine Kegelfläche begrenzt ist, die einen in Richtung der Mündung des Kragens vergrößerten Durchmesser aufweist. Die an dem Rotationskörper außenseitige Festlegung des Ringelementes ermöglicht eine besonders kostengünstige und einfache Bearbeitung des Innenumfangs des Kragens. Lediglich eine Kegelfläche im Bereich des Außenumfanges des Rotationskörpers gewährleistet die sichere Zuordnung beider Teile. Die Kegelfläche in Form einer Hinterschneidung kann beispielsweise durch Drehen erzeugt sein.

Der Vorsprung kann den Kragen im Bereich seiner Stirnfläche anliegend berühren. In Abhängigkeit von der Ausgestaltung des erfindungsgemäßen Rotationskörpers und dem Ringelement kann eine derartige Ausgestaltung besonders dann vorteilhaft sein, wenn der Rotationskörper in beengten Platzverhältnissen insbesondere in axialer Richtung zur Anwendung gelangt. Die nachträgliche Montage des Ringelementes ist dann besonders einfach möglich.

Der Rotationskörper kann beispielsweise als Riemenscheibe ausgebildet sein. Akustisch störende Schwingungen treten bei der bestimmungsgemäßen Verwendung von Riemenscheiben besonders häufig auf ebenso, wie bei Rotationskörpern, die als Zahnräder ausgebildet sind und in Getrieben zur Anwendung gelangen.

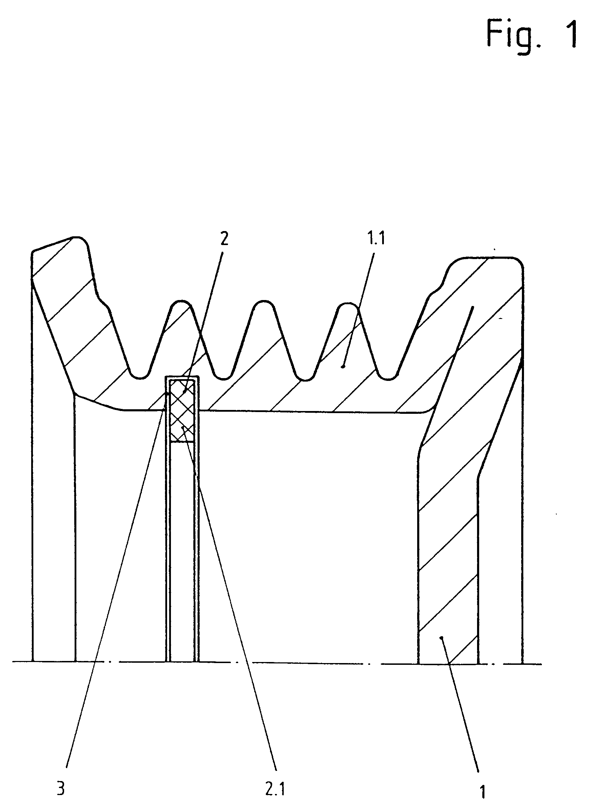

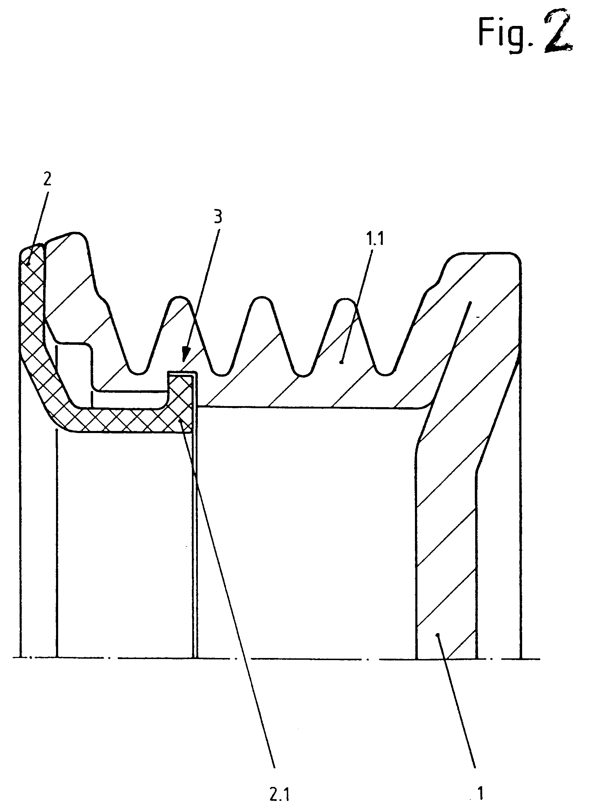

Der Gegenstand der vorliegenden Erfindung wird nachfolgend anhand der Zeichnungen weiter erläutert. Diese zeigen die zu berücksichtigenden Einzelkomponenten teilweise in schematischer Darstellung. Die Fig. 1 bis 3 zeigen verschienenten teilweise in schematischer Darstellung. Die Fig. 1 bis 3 zeigen verschiedene Ausführungsbeispiele des erfindungsgemäßen Rotationskörpers, der jeweils als Riemenscheibe dargestellt ist. Die Ringelemente aus elastischem Werkstoff können beispielsweise aus Gummi, Kunststoff oder einem Faservlies bestehen, das in der Riemenscheibe aufgenommen ist.

In Fig. 1 ist das Ringelement 2 in einer Nut 3 angeordnet. Das Ringelement 2 ist unter Vermeidung einer inneren Vorspannung in die Nut 3 eingeschnappt und verliersicher in dieser festgelegt.

In Fig. 2 ist das Ringelement 2 derart angeordnet, daß es unter sehr geringer Vorspannung in axialer Richtung mit dem Rotationskörper 1 verspannt ist. Die Montage, insbesondere bei Einbausituationen, die in axialer Richtung schlecht zugänglich sind, ist durch diese Ausgestaltung vereinfacht, ohne daß die vorteilhafte Wirkung der Anordnung verloren geht.

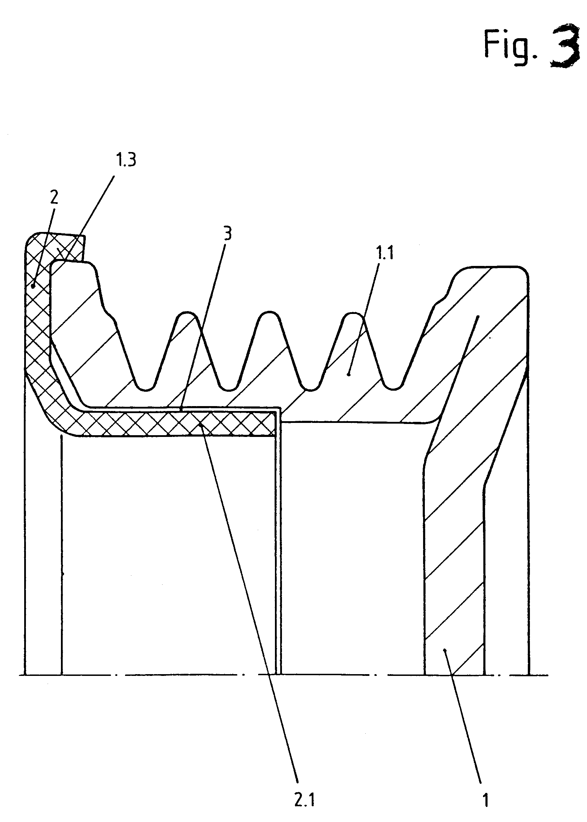

Das Ausführungsbeispiel nach Fig. 3 zeigt ein Ringelement 2, das auf einer Hinterschneidung, die als Kegelfläche 1.3 ausgebildet ist, am äußeren Umfang im Bereich der Mündung des Kragens 1.1 eingeschnappt ist.

Die Rotationskörper 1, die hier als Riemenscheiben ausgebildet sind, weisen eine ausgezeichnete Isolierung akustisch störender Schwingungen auf, eine einfache Montage sowie eine lange Gebrauchsdauer.

## Patentansprüche

1. Topfförmiger Rotationskörper (1), an dem ein Ringelement (2) aus elastischem Werkstoff im Bereich zumindest eines in axialer Richtung vorstehenden Kragens (1.1) festgelegt ist, wobei das Ringelement (2) und der Rotationskörper (1) unter Vermeidung einer inneren Vorspannung einander anliegend berühren und wobei zwischen dem Ringelement (2) und dem Rotationskörper (1) in zumindest einem Teilbereich ein radialer Spaltabstand vorhanden ist, wobei der Kragen (1.1) mit einer in radialer Richtung in sein Profil einschneidenden, ringförmig umlaufenden Nut (3) versehen ist, dadurch gekennzeichnet, daß das Ringelement (2) nur durch Einschnappen in der Nut (3) festgelegt ist.

2. Rotationskörper nach Anspruch 1, dadurch gekennzeichnet, daß der Spaltabstand eine radiale Weite von höchstens 0,5 mm aufweist.

3. Rotationskörper nach Anspruch 1 oder 2, dadurch gekennzeichnet, daß das Ringelement (2) die Nut (3) in radialer Richtung mit einem umlaufenden Vorsprung (2.1) überragt und daß der Vorsprung (2.1) außerhalb der Nut (3) einen an das Profil des Rotationskörpers (1) zumindest teilweise angepaßten Querschnitt hat.

4. Rotationskörper nach einem der Ansprüche 1 bis 3, dadurch gekennzeichnet, daß die Nut (3) im Bereich des Außenumfanges des Kragens (1.1) angeordnet und in radialer Richtung durch eine Kegelfläche (1.3) begrenzt ist, die einen in Richtung der Mündung des Kragens (1.1) vergrößerten Durchmesser aufweist.

5. Rotationskörper nach einem der Ansprüche 1 oder 2, dadurch gekennzeichnet, daß der Vorsprung (2.1) den Kragen (1.1) im Bereich seiner Stirnfläche anliegend berührt.

6. Rotationskörper nach einem der Ansprüche 1 bis 5, gekennzeichnet durch die Verwendung als Riemenscheibe.

## Claims

1. A pot-shaped body of revolution (1) on which a ring element (2) made of flexible material is fixed at least in the region of an axially projecting collar (1.1), the ring element (2) and the body of revolution (1) resting against one another in a manner which avoids internal prestress, and there being a radial gap between the ring element (2) and the body of revolution (1) in at least one subregion, the collar (1.1) being provided with a groove (3) which cuts into its profile in the radial direction and runs round it in the form of a ring, characterised in that the ring element (2) is fixed in the groove (3) only by being snapped into it.

2. A body of revolution according to claim 1, characterised in that the gap has a radial width of no more than 0.5 mm.

3. A body of revolution according to claim 1 or 2, characterised in that the ring element (2) projects beyond the groove (3) in the radial direction with an encircling projection (2.1) and in that, outside the groove (3), the projection (2.1) has a cross-section at least partially matched to the profile of the body of revolution (1).

4. A body of revolution according to any one of claims 1 to 3, characterised in that the groove (3) is arranged in the region of the outer circumference of the collar (1.1) and is bounded in the radial direction by a tapered surface (1.3) which has a diameter enlarged in the direction of the opening of the collar (1.1).

5. A body of revolution according to either of claims 1 and 2, characterised in that the projection (2.1) rests against the collar (1.1) in the region of its end face.

6. A body of revolution according to any one of claims 1 to 5, characterised by its use as a belt pulley.

## Revendications

1. Corps de rotation (1) en forme de pot, sur lequel un élément annulaire (2) en matériau élastique est fixé dans la région d'au moins un rebord (1.1) saillant en direction axiale, l'élément annulaire (2) et le corps de rotation (1) se trouvant en contact étroit l'un avec l'autre sans qu'il y ait de précontrainte interne, et un écartement radial fourni par une fente existant, au moins dans une partie, entre l'élément annulaire (2) et le corps de rotation (1), le rebord (1.1) étant pourvu d'une gorge (3) périphérique circulaire entaillant son profil dans la direction radiale, ce corps de rotation étant caractérisé en ce que l'élément annulaire (2) est fixé dans la gorge (3) par enclenchement dans celle-ci.

2. Corps de rotation selon la revendication 1, caractérisé en ce que l'écartement est fourni par une fente ayant une largeur radiale mesurant au plus 0,5 mm.

3. Corps de rotation selon la revendication 1 ou 2, caractérisé en ce que l'élément annulaire (2) a une partie saillante (2.1) périphérique qui sort de la gorge (3) dans le sens radial et en ce que la partie saillante (2.1) a, à l'extérieur de la gorge (3), une section transversale au moins partiellement adaptée au profil du corps de rotation (1).

4. Corps de rotation selon l'une des revendications 1 à 3, caractérisé en ce que la gorge (3) est située dans la région de la circonférence externe du rebord (1.1) et est limitée, dans le sens radial, par une surface conique (1.3) présentant un diamètre qui augmente en direction de l'embouchure du rebord (1.1).

5. Corps de rotation selon l'une des revendications 1 ou 2, caractérisé en ce que la partie saillante (2.1) est contiguë au rebord (1.1) dans la région de sa surface frontale.

6. Corps de rotation selon l'une des revendications 1 à 5, caractérisé par son utilisation en tant que poulie.
